# EUROPÄISCHE PATENTSCHRIFT

(11) **EP 0 464 374 B1**
(45) Veröffentlichungstag und Bekanntmachung des Hinweises auf die Patenterteilung: **04.10.1995**
(21) Anmeldenummer: 91108902.7
(22) Anmeldetag: 31.05.1991
(51) Int. Cl.: A01D 43/10, F16D 7/02, A01D 69/00

(54) **Antriebssystem**
Drive system
Système d'entraînement

(30) Priorität: 08.06.1990 US 534999
(43) Veröffentlichungstag der Anmeldung: 08.01.1992
(73) Patentinhaber: DEERE & COMPANY, Moline, Illinois 61265 (US)
(72) Erfinder: Rosenbalm, Allan Wesley, Ottumwa, Iowa 52501 (US); Walters, James C., Ottumwa, Iowa 52501 (US)
(74) Vertreter: Feldmann, Bernhard

(56) Entgegenhaltungen:
- FR-A- 1 604 664
- FR-A- 2 268 452
- US-A- 2 592 928
- US-A- 2 659 220
- US-A- 2 712 282
- US-A- 3 300 953
- US-A- 3 555 791
- US-A- 3 633 345
- US-A- 3 729 907
- US-A- 3 780 506
- US-A- 4 558 608

## Beschreibung

Die Erfindung betrifft ein Antriebssystem für eine Erntemaschine, insbesondere für eine Halmgutaufbereitungsmaschine, mit einer ersten und einer zweiten anzutreibenden Einheit.

Erntemaschinen, insbesondere Halmgutaufbereitungsmaschinen, weisen üblicherweise eine Vielzahl anzutreibender Wellen, Räder und dergleichen auf, so daß entsprechende Antriebsmittel zur Verfügung stehen müssen. Vielfach werden die Antriebe von anzutreibenden Einheiten wie Mähwerken mit Haspeln, Quetschwalzen oder Rotoren zusammengefaßt und gemeinsam oder über Untergetriebe angetrieben. Diese Antriebsmittel sind herkömmlich jedoch ungünstig angeordnet, benötigen viel Bauraum oder sind nicht ausreichend bzw. individuell gegen Überlastung geschützt.

Die US-A-3,729,907 offenbart eine Halmgutaufbereitungsmaschine, einen sogenannten Mower Conditioner, bei der sich zwischen einer Antriebsquelle, einem Ackerschlepper und einem vorgelagerten Getriebe eine Hauptantriebskupplung und zwischen dem Getriebe und anzutreibenden Quetschwalzen kurze Wellen mit endseitig vorgesehenen Universalgelenken erstrecken, die die Baubreite der Halmgutaufbereitungsmaschine erhöhen. Zudem unterliegen die Universalgelenke einem nicht zu vernachlässigenden Verschleiß. Eine Haspel und ein Mähwerk werden ausgehend von einer der Quetschwalzen angetrieben, sie sind dieser im Antrieb also nachgeschaltet. Diese Anordnung ist insofern nachteilig, als ein Durchrutschen der Hauptantriebskupplung aufgrund einer Blockage an dem Mähwerk auch einen Stillstand der Quetschwalzen bewirkt, so daß die gesamte Halmgutaufbereitungsmaschine in einem verstopften Zustand stehen bleibt.

Aus der US-A-3,555,791 geht eine Maschine der gleichen Gattung hervor, bei der ausgangsseitig eines Winkelgetriebes eine Welle mit drei Scheiben für Zugmittelgetriebe vorgesehen ist. Über jede der Scheiben werden Komponenten von anzutreibenden Einheiten, und zwar ein Mähwerk und eine Haspel zum einen und Quetschwalzen zum anderen angetrieben. Zwar wird aufgrund der Zugmittelgetriebe weniger Bauraum benötigt, und die Baubreite ist geringer als bei der vorgenannten Maschine; als Überlastsicherung ist aber nur ein weiterer dem Winkelgetriebe vorgeschalteter Riementrieb vorgesehen, der nicht gesondert auf die Überlastzustände in der einen oder der anderen anzutreibenden Einheit eingehen kann. Ein vergleichbares Antriebssystem ergibt sich zudem aus der US-A-3,698,162.

Den Antriebssystemen beider Halmgutaufbereitungsmaschinen ist als Nachteil gemein, daß sie auf die jeweiligen Gegebenheiten abgestimmt sind und nicht in einfacher Weise so umgestaltet werden können, daß sie auch an einer nach einem anderen Prinzip arbeitenden Halmgutaufbereitungsmaschine verwendet werden können. Bei den Halmgutaufbereitungsmaschinen kommen im wesentlichen folgende Prinzipien in Betracht: Scheibenmähwerk ohne Haspel mit Quetschwalzen; Balkenmähwerk mit Haspel mit Quetschwalzen und Scheibenmähwerk ohne Haspel mit Aufbereitungsrotor.

Die der Erfindung zugrunde liegende Aufgabe wird darin gesehen, ein Antriebssystem für eine Erntemaschine, insbesondere für eine Halmgutaufbereitungsmaschine, zu entwickeln, das einen geringen Bauraum erfordert und in einfacher Weise an nach verschiedenen Prinzipien arbeitende Erntemaschinen angepaßt werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise sind die zum Antrieb erforderlichen An- und Abtriebsscheiben in einer einzigen Einheit zusammengefaßt, die im Aufbau kompakt ist, und die durch eine Änderung der Anpreßkraft ihrer Anpreßmittel an die jeweiligen Gegebenheiten angepaßt werden kann. Aber auch bei dieser kompakten Bauweise kann jede der Abtriebsscheiben für sich durchrutschen, wenn an der mit ihr verbundenen anzutreibenden Einheit, z. B. dem Mähwerk oder den Quetschwalzen, ein Überlastzustand eintritt. Mittels einer Veränderung der Lage der Hauptantriebskupplung und somit auch der der Abtriebsscheiben kann auch eine Anpassung an die räumlichen Gegebenheiten vorgenommen werden, die bei nach unterschiedlichen Prinzipien funktionierenden Erntemaschinen auftreten können.

Eine einfache Lagerung der Hauptantriebskupplung ist durch die Verwendung einer Welle möglich, die an einem Rahmen der Erntemaschine, einem Gehäuse der anzutreibenden Einheit oder an einem Hauptträger angebracht sein kann, der an einer geeigneten Stelle oder in einer geeigneten Stellung befestigt wird. Anderenfalls könnte die Hauptantriebskupplung in Lagern in einem Rahmen oder dergleichen drehbar aufgenommen werden.

Die Ausbildung wenigstens einer der Antriebsverbindungen als Stirnradgetriebe führt bereits zu einer wesentlichen Bauraumersparnis, da die Antriebs- und Abtriebsräder in einer Ebene verlaufen, und die Erstreckung quer zu dieser Ebene gering ist. Die Ersteckung in der Ebene ist geringeren Beschränkungen unterworfen, weil die anzutreibenden Komponenten bauartbedingt in der Richtung der Ebene stets einen größeren Abstand zueinander aufweisen. Außerdem können bei einem Stirnradgetriebe Übersetzungsverhältnisse einfach geändert oder Umkehr- und Übersetzungswellen hinzugefügt werden.

Dieselben Vorteile ergeben sich bei der Verwendung eines Zugmittelgetriebes mit einer Kette oder einem Riemen.

Eine gleichförmige und nie unterbrochene Antriebsverbindung auch bei einer sich bewegenden Quetschwalze wird dann sichergestellt, wenn der Schwenkmittelpunkt und die Drehachse des betreffenden Abtriebsrads zusammenfallen.

Zum Antrieb zweier gegensinnig umlaufender Quetschwalzen können in Stirnradgetriebebauweise bei geringstmöglichem Bauaufwand und Bauraum gleichzeitig das Antriebszahnrad für die eine Quetschwalze, wie auch das Umlenkrad für das Antriebsrad der zweiten Quetschwalze angetrieben werden. Diese Anordnung ist sogar dann noch durchführbar, wenn anstatt von Quetschwalzen ein Rotor verwendet wird, der breiter ausgebildet ist und mittels einer Umlenkwelle angetrieben wird.

Eine Anpassung des Antriebssystems, ohne an der Erntemaschine wesentliche Änderungen vorzunehmen, wird insbesondere dadurch ermöglicht, daß die Welle ein Teil eines selbständigen Hauptträgers ist, der an einer geeigneten Stelle an der Erntemaschine mit der dazugehörigen Hauptantriebskupplung angebracht werden kann.

Der Hauptträger wird zu einem universellen Bauteil, wenn mit ihm zudem eine Möglichkeit zur Lagerung eines Umlenkrads innerhalb des Antriebssystems geschaffen wird, so daß ein weiteres eigenständiges Teil an der Erntemaschine hierfür nicht erforderlich ist.

Eine Anpassung der Erntemaschine an weitere Erfordernisse kann sehr leicht herbeigeführt werden, wenn die erforderliche Maßnahme an dem Hauptträger vorgenommen werden kann, wie dies durch die schwenkbare Aufnahme der Walzentragarme auf einem mit dem Hauptträger verbundenen Schwenkzapfen möglich ist. Dadurch, daß die Welle an dem Hauptträger anstatt an einer Wand oder dergleichen angebracht wird, ist eine exakte Positionierung dieser Welle zu der die Hauptantriebskupplung aufnehmenden Welle möglich.

Eine konstruktiv einfache und platzsparende Antriebsübertragung zu einer Haspel mit der Möglichkeit einer Drehzahluntersetzung und der Gewährleistung eines Synchronlaufs zwischen den beteiligten Elementen wird durch die Verwendung des in Anspruch 10 gelehrten Vorgelegegetriebes geschaffen.

Ein sich parallelachsig zu der Hauptantriebskupplung erstreckender Rotor kann ebenfalls mit einem Vorgelegegetriebe in der gleichen Drehrichtung wie die Hauptantriebskupplung bzw. deren Abtriebsrad angetrieben werden.

Der Hauptträger erfährt eine weitere Funktion, wenn er in dem Falle der Verwendung einer Umlenkwelle gleichzeitig mit seiner einen Welle deren Lager bildet.

Ein Winkelgetriebe kann in verschiedenen Stellungen angeschlossen werden und somit unterschiedliche Ausgangsdrehzahlen liefern, wenn die Eingangs- und die Ausgangsseiten miteinander vertauschbar sind, was durch die Verwendung eines einheitlichen Profils auf den betreffenden Eingangs- und Ausgangswellen möglich ist.

Sehr vorteilhaft wirkt sich die Möglichkeit der Änderung des Übersetzungsverhältnisses aus, wenn der Änderungsfaktor exakt den Drehzahlunterschied zwischen einer mit 540 Upm und einer mit 1000 Upm drehenden Zapfwelle eines Ackerschleppers ausgleicht. Auf diese Weise kann durch eine einfache Umkehr des Winkelgetriebes die Erntemaschine zur Benutzung an einem Ackerschlepper mit der jeweiligen Drehzahl gerüstet werden.

Die Überlastgrenze der Hauptantriebskupplung kann variiert und somit an die jeweils erforderlichen Antriebsmomente angepaßt werden, wenn die mittels der Anpreßmittel aufgebaute Reibkraft der Abtriebsscheiben an der Antriebsscheibe veränderbar ist.

In der Zeichnung sind nachfolgend näher beschriebene Ausführungsbeispiele der Erfindung dargestellt. Es zeigt:
- Fig. 1: eine Erntemaschine mit einem erfindungsgemäßen Antriebssystem in Seitenansicht von links,
- Fig. 2: das Antriebssystem nach Figur 1 in vergrößerter Darstellung,
- Fig. 3: das Antriebssystem nach Figur 2 in Draufsicht,
- Fig. 4: eine Hauptantriebskupplung in Explosionsdarstellung,
- Fig. 5: einen Teil des Antriebssystems nach Figur 2, jedoch in gegenüber Figur 3 geänderter Ausführung,
- Fig. 6: eine mit einem Scheibenmähwerk und Quetschwalzen ausgerüstete Erntemaschine mit einem Antriebssystem in Seitenansicht von links,
- Fig. 7: das Antriebssystem nach Figur 6 in Draufsicht,
- Fig. 8: eine Erntemaschine gemäß Figur 6, jedoch mit einem Rotor und
- Fig. 9: das Antriebssystem der Erntemaschine nach Figur 8 in Draufsicht.

Es wird eingangs der Beschreibung darauf hingewiesen, daß in der Anmeldung mehrfach Elemente als im Paar vorhanden beschrieben sind, wobei allerdings jeweils nur ein Element gezeigt ist. Außerdem sind Erläuterungen wie "rechts", "links", "vorne", "hinten", und dergleichen aus der Sicht eines die Erntemaschine von hinten ansehenden Betrachters gewählt. Schließlich bedeutet "innenliegend" jeweils der Maschinenlängsmittenachse zugelegen, während "außenliegend" jeweils der Maschinenlängsmittenachse abgelegen bedeutet.

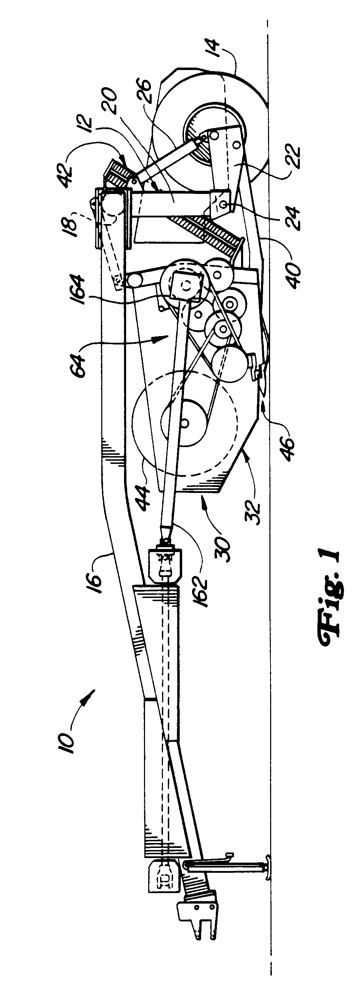

Aus Figur 1 ist eine gezogene Erntemaschine 10 in der Art einer Halmgutaufbereitungsmaschine gezeigt, die einen Hauptrahmen 12 enthält, der sich auf Rädern 14 auf dem Boden abstützt und in seinem oberen, linken Bereich mit einer Deichsel 16 verbunden ist. Anstatt einer Halmgutaufbereitungsmaschine kommt auch ein gezogener Häcksler, ein Vollernter, ein Mähdrescher oder dergleichen in Betracht. Der Hauptrahmen 12 ist mit einem rohrförmigen Querteil 18 versehen, von dem sich nach unten Ständer 20 erstrecken. Die Räder 14 sind jeweils an rückwärtigen Enden eines Paars von Tragradarmen 22 drehbar angebracht, die jeweils in dem Schwenkpunkt 24 schwenkbar an den Ständern 20 angreifen. Zwischen jedem der Ständer 20 und einem dazugehörigen Tragradarm 22 ist ein aus- und einfahrbarer Hydraulikzylinder 26 vorgesehen, mittels dessen die Tragradarme 22 wahlweise geschwenkt werden können, so daß die Höhe des Rahmens 12 mit Bezug auf den Boden geändert werden kann.

Vor dem Hauptrahmen 12 erstreckt sich eine Bergungsvorrichtung 30 mit einem Rahmen 32, der sich gegenüberliegende Endelemente aufweist, unter denen sich voneinander entfernte senkrechte seitliche Wände 34 befinden, deren obere Abschnitte mittels eines Querrohrs 36 untereinander verbunden sind. Die Bergungsvorrichtung 30 ist an den Hauptrahmen 12 mittels eines Viergelenkmechanismus' angehängt, der einen mittig angeordneten oberen Lenker 38 enthält, der sich von dem Querteil 18 zu dem Querrohr 36 erstreckt. Zu diesem Viergelenkmechanismus gehört zudem ein Paar seitlich zueinander einen Abstand aufweisender unterer Lenker 40, die an entsprechende Tragradarme 22 und die Endelemente des Rahmens 32 angeschlossen sind. Als Gegengewicht für die Bergungsvorrichtung 30 ist ein Paar von Federeinheiten 42 vorgesehen, die jeweils an entgegengesetzte Endbereiche des Hauptrahmens 12 und an entgegengesetzte Endbereiche der Rahmens 32 angeschlossen sind.

Die Bergungsvorrichtung 30 ist mit einer Guttrennvorrichtung ausgerüstet, die eine Haspel 44 und ein Mähwerk 46 in der Art eines Mähbalkens enthält, die sich jeweils zwischen den seitlichen Wänden 34 erstrecken. Die Haspel 44 enthält eine Mittenwelle 48, die drehbar in den seitlichen Wänden 34 gelagert ist und an ihrem linken Ende eine Scheibe 50 zum Antrieb der Haspel 44 trägt. Das Mähwerk 46 wird von den Endelementen des Rahmens 32 getragen und weist einen Taumelscheibenantrieb 52 auf, der eine Eingangswelle, die mit einer Mähwerksantriebsscheibe 54 verbunden ist, und eine Ausgangswelle trägt, auf die ein Mähmesserantriebsarm 56 montiert ist.

Die Bergungsvorrichtung 30 ist zudem mit einer Gut-Aufbereitungsvorrichtung versehen, die in diesem Fall eine obere und eine untere Quetschwalze 58 und 60 enthält, die sich zwischen den seitlichen Wänden 34 und rückwärtig des Mähwerks 46 befinden, so daß die Haspel 44 das abgeschnittene Gut in einen Spalt zwischen den beiden Quetschwalzen 58, 60 einführen kann. Im einzelnen ist die untere Quetschwalze 60 jeweils mit ihren gegenüberliegenden Enden drehbar in den seitlichen Wänden 34 aufgenommen, während die sich gegenüberliegenden Enden der oberen Quetschwalze 58 auf den jeweils vorderen Endbereichen eines Paars von Walzentragarmen 62 getragen sind. Die Walzentragarme 62 sind jeweils vertikal schwenkbar an den seitlichen Wänden 34 befestigt, wobei die obere Quetschwalze 58 zu der unteren Quetschwalze 60 hin- bzw. von dieser wegschwenkbar ist, um sich somit unterschiedlichen Dicken der zugeführten Erntegutmatten angleichen zu können.

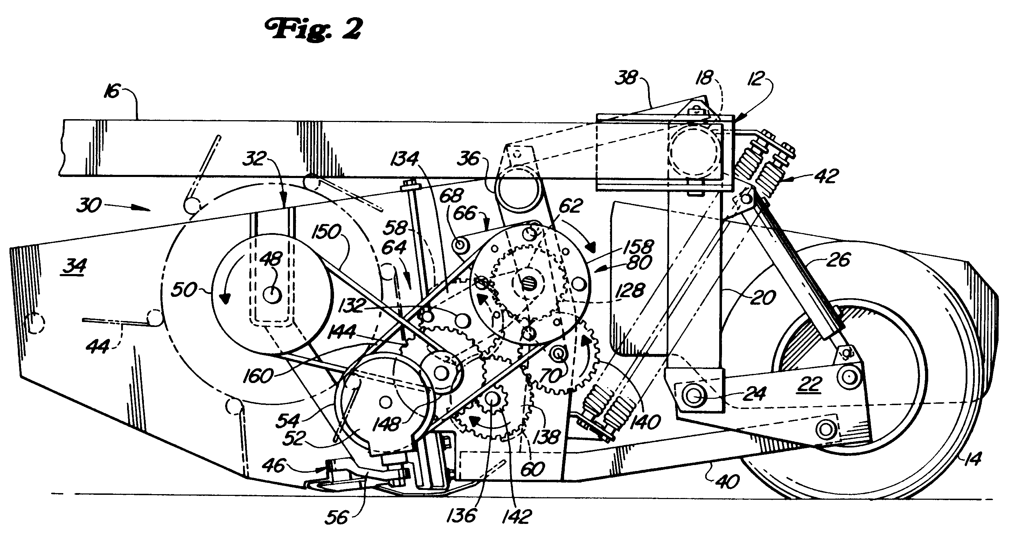

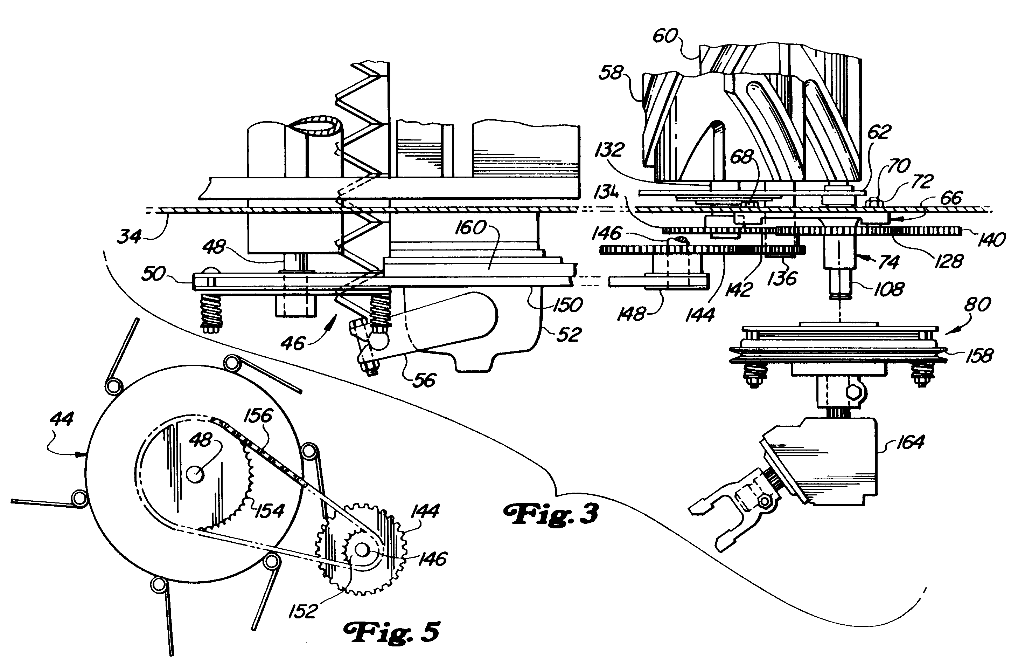

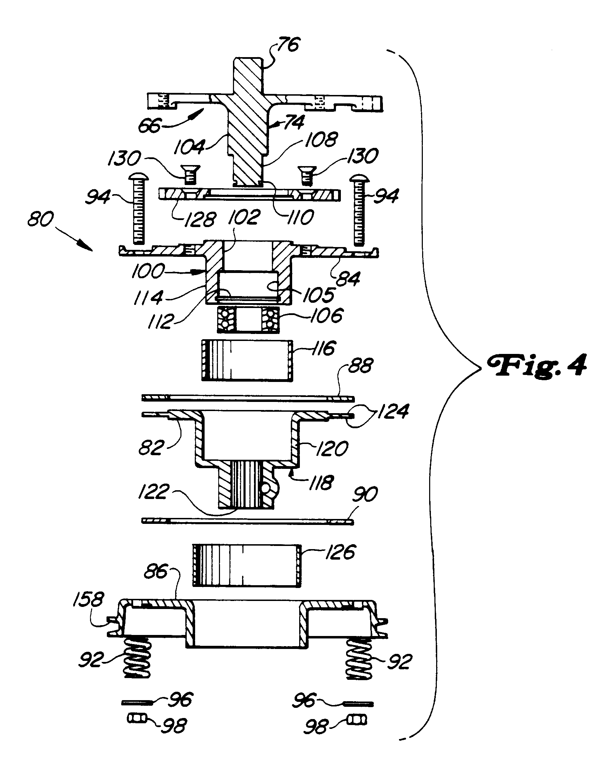

Schließlich enthält die Bergungsvorrichtung 30 ein Antriebssystem 64 zum Antreiben einer aus der Haspel 44 und dem Mähwerk 46 bestehenden zweiten anzutreibenden Einheit und einer aus der oberen und der unteren Quetschwalze 58, 60 bestehenden ersten anzutreibenden Einheit. Im weiteren wird insbesondere auf die Darstellung in den Figuren 2 bis 4 verwiesen. Das Antriebssystem 64 enthält einen dreiecksförmigen, vorzugsweise aus Guß hergestellten Hauptträger 66, der so angeordnet ist, daß er oben einen vorderen und einen rückwärtigen Eckbereich und unten einen rückwärtigen Eckbereich aufweist. Die oberen vorderen und rückwärtigen Eckbereiche sind jeweils mit Gewindebohrungen ausgestattet, die Schrauben 68 zum Festlegen des Hauptträgers 66 an der linken seitlichen Wand 34 aufnehmen. In den unteren rückwärtigen Eckbereich ist eine Durchgangsbohrung eingearbeitet, in die eine Welle 70 mit einem Endbereich von verringertem Durchmesser gepreßt ist, wobei auf den innenliegenden Endbereich 72 der Welle 70 eine Mutter 72 aufgeschraubt ist. Als Bestandteile des Hauptträgers 66 selbst sind an diesen eine sich nach außen erstreckende Welle 74 und ein sich nach innen erstreckender Schwenkzapfen 76 angeformt, wobei sich der letztgenannte durch eine in der linken seitlichen Wand 34 vorgesehene Öffnung hindurch erstreckt. Die Welle 74 und der Schwenkzapfen 76 sind jeweils auf der Schwenkachse der Walzentragarme 62 angeordnet, von denen der linke schwenkbar auf dem Schwenkzapfen 76 gelagert ist. Auf die Welle 74 ist drehbar eine Hauptantriebskupplung 80 aufmontiert, die eine Hauptantriebsscheibe 82 enthält, die sich zwischen einer zweiten Abtriebsscheibe 84 und einer ersten Abtriebsscheibe 86 erstreckt. Eine zweite Reibungsscheibe 88 befindet sich zwischen einer Innenfläche der Hauptantriebsscheibe 82 und der zweiten Abtriebsscheibe 84, während eine erste Reibungsscheibe 90 zwischen eine Außenfläche der Hauptantriebsscheibe 82 und der ersten Abtriebsscheibe 86 eingesetzt ist. Die Abtriebsscheiben 84, 86, die auch als Innen- und Außendruckplatten bezeichnet werden können, werden mittels der Kraft von mehreren als Schraubendruckfedern ausgebildeten Anpreßmitteln 92 zueinander und gegen die Hauptantriebsscheibe 82 gedrückt. Diese Anpreßmittel 92 werden auf den Endabschnitten einer Vielzahl von Schrauben 94 aufgenommen, die sich durch zugeordnete, fluchtende Bohrungen in kreisförmiger Anordnung mit gleichem Abstand in den Abtriebsscheiben 84 und 86 erstrecken. Auf jede der Schrauben 94 ist eine Scheibe 96 aufgesteckt, die mittels jeweils einer auf die Schraube 94 aufgeschraubten Mutter 98 an dem entsprechenden Anpreßmittel 92 zur Anlage gebracht wird. Es wird darauf hingewiesen, daß, obwohl in dem Ausführungsbeispiel acht Schraubenaufnahmebohrungen in den Abtriebsscheiben 84, 86 vorgesehen sind, nur vier Anpreßmittel 92 benötigt werden, um das Maß des erforderlichen Drehmoments, das für den Antrieb des Mähwerks 46 erforderlich ist, schlupffrei zu übertragen. Allerdings sind für andere Ausführungsarten, wie sie hiernach beschrieben werden, vier zusätzliche Anpreßmittel 92 zur Drehmomentübertragung erforderlich.

Zur Montage der Hauptantriebskupplung 80 auf der Welle 74 ist die zweite Abtriebsscheibe 84 mit einer Nabe 100 versehen, die einen schmalen, kleinen, innenliegenden Innendurchmesserabschnitt 102 hat, der lose auf einem großen, breiten, ebenfalls innenliegenden Durchmesserabschnitt 104 der Welle 74 aufgenommen ist. Die Nabe 100 hat zudem einen außenliegenden, großen Innendurchmesserabschnitt 105, in dem ein Außenring eines Kugellagers 106 aufgenommen ist, während dessen Innenring auf einem schmalen, kleinen, außenliegenden Durchmesserabschnitt 108 der Welle 74 sitzt. Ein erster nicht gezeigter Sicherungsring ist in einer Ringnut 110 aufgenommen, die sich in dem außenliegenden Endbereich der Welle 74 befindet, und liegt an der Außenfläche des Innenrings des Kugellagers 106 an, um dieses in seiner Lage an einer nicht definierten Schulter an dem Durchmesserabschnitt 104 zu halten. Ein zweiter ebenfalls nicht gezeigter Sicherungsring ist in einer Ringnut 112 aufgenommen, die in den äußeren Endabschnitt des großen Innendurchmesserabschnitts 105 der Nabe 100 eingedreht ist, und liegt an der Außenstirnfläche des Außenrings des Kugellagers 106 an. Die Nabe 100 hat eine zylindrische Außenfläche 114, auf die eine Hülse 116 aufgeschoben ist. Die Antriebsscheibe 82 ist mit einer Nabe 118 versehen, die einen innenliegenden, großen Innendurchmesserabschnitt 120 enthält, der drehbar auf der Hülse 116 aufgenommen ist, und mit einer außenliegenden, schmalen, kleinen Nabe 122, die aus den nachstehend genannten Gründen innengezahnt ist. Auf einem äußeren Umfangsbereich der Antriebsscheibe 82 sind Ringflächen 124 auf den sich gegenüberliegenden Seiten angearbeitet, an denen die innenliegende und die außenliegende Reibungsscheibe 88 und 90 zur Anlage kommen. Eine zweite Hülse 126 ist auf eine große, zylindrische Außenfläche der Nabe 118 aufgesteckt, und die erste Abtriebsscheibe 86 ist auf der zweiten Hülse 126 drehbar aufgenommen.

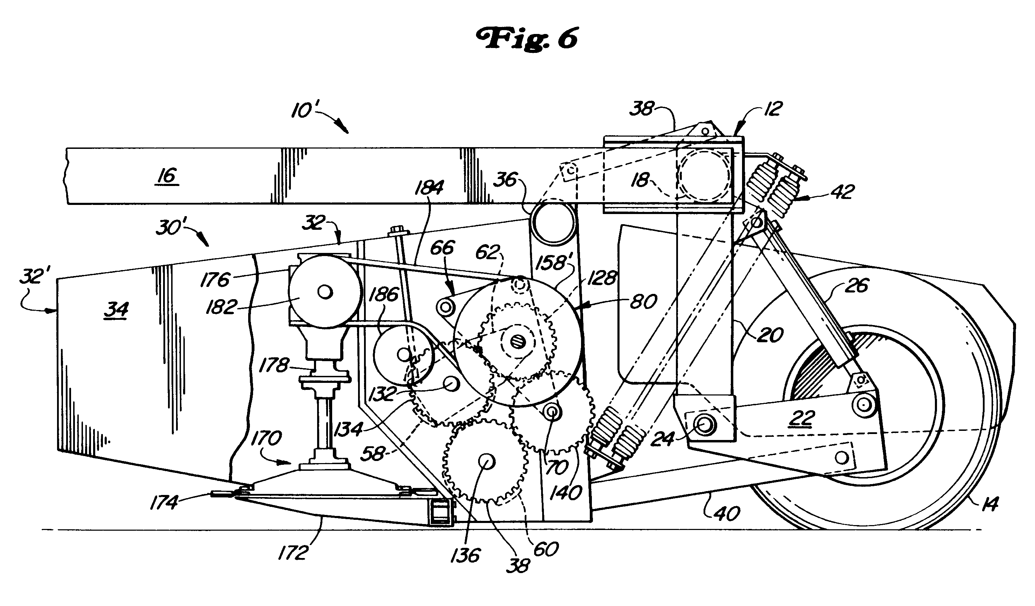

Ein stirnradgetriebe ist vorgesehen, um die Hauptantriebskupplung 80 an die Quetschwalzen 58 und 60 anzuschließen. Im einzelnen ist zur gemeinsamen Drehverbindung mit der zweiten Abtriebsscheibe 84 ein Hauptantriebszahnrad 128 vorgesehen, das an der innenliegenden Stirnfläche der zweiten Abtriebsscheibe 84 mittels mehrerer Schrauben 130 befestigt ist, die sich durch das Hauptantriebszahnrad 128 erstrecken und in Gewindebohrungen in der zweiten Abtriebsscheibe 84 eingedreht sind. Das linke Ende der oberen Quetschwalze 58 wird von einer Welle 132 gebildet, die sich durch eine sich vertikal ausdehnende Spielöffnung in der linken seitlichen Wand 34 erstreckt und ein Antriebszahnrad 134 für die obere Quetschwalze 58 trägt, das mit dem Hauptantriebszahnrad 128 kämmt. Nachdem die Walzentragarme 62 um die Achse des Hauptantriebszahnrads 128 schwenken, bleibt der Zahneingriff auch dann noch erhalten, wenn sich die obere Quetschwalze 58 während des Betriebs auf- und abbewegt. Das linke Ende der unteren Quetschwalze 60 wird von einer Welle 136 gebildet, die sich durch die linke seitliche Wand 34 erstreckt und ein Antriebszahnrad 138 für die untere Quetschwalze 60 trägt. Das Hauptantriebszahnrad 128 ist zum Antrieb der unteren Quetschwalze 60 mit einem Umlenkrad 140 verbunden, das auf der Welle 70 drehbar aufgenommen ist und sowohl mit dem Hauptantriebsrad 128 wie auch mit dem Antriebszahnrad 138 für die untere Quetschwalze 60 kämmt. Ein Antriebsrad 142 für die Haspel 44 ist nach außen gegenüber dem Antriebszahnrad 138 versetzt auf die Welle 136 aufgesetzt und steht in Eingriff mit einem Zahnrad 144, das auf den äußeren Abschnitt einer Übersetzungswelle 146 eines Haspelantriebs aufgesetzt ist, die selbst drehbar von den Endelementen des Rahmens 32 der Bergungsvorrichtung 30 getragen wird. Eine Scheibe 148, vorzugsweise eine Riemenscheibe, zum Antrieb der Haspel 44 ist auf den außenliegenden Abschnitt der Übersetzungswelle 146 montiert und mit der getriebenen Scheibe 50 zum Antrieb der Haspel 44 über einen Riemen 150 verbunden. Es ist am besten in Figur 5 zu erkennen, daß ein treibendes Zahnrad 152 und ein getriebenes Zahnrad 154 für den Antrieb der Haspel 44 jeweils einen Ersatz für die treibende Scheibe 148 und die getriebene Scheibe 50 bilden und über eine Antriebskette 156 miteinander verbunden werden könnten.

Eine Antriebsscheibe 158 zum Antrieb des Mähwerks 46 ist als ein Bestandteil der ersten Abtriebsscheibe 86 ausgebildet und mit der getriebenen Mähwerksantriebsscheibe 54 über einen Riemen 160 verbunden. Zwar weist die Antriebsscheibe 158 nur eine einzige Nut auf; es könnte statt dessen aber auch eine Antriebsscheibe 158 mit mehreren Nuten verwendet werden, auf die ein Vielfachkeilriemen zur Übertragung eines zusätzlichen Drehmoments aufgelegt werden könnte, wie dies nachstehend beschrieben wird.

Der Hauptantriebskupplung 80 wird die Leistung von einer Zapfwelle eines nicht gezeigten und die Erntemaschine 10 ziehenden Ackerschleppers zugeführt. Die Antriebsübertragung zu der Hauptantriebskupplung 80 erfolgt hierzu über eine Antriebswelle 162, die von einer Zugdeichsel getragen wird, und ein Winkelgetriebe 164. Das Winkelgetriebe 164 enthält eine erste gezahnte Welle - Eingangswelle -, die lösbar mit der Antriebswelle 62 verbunden werden kann, und eine zweite gezahnte Welle - Ausgangswelle -, die in der gezahnten außenliegenden Nabe 122 an der Nabe 118 aufgenommen ist. Das Winkelgetriebe 164 ist mit einem Paar von Kegelrädern bestückt, die so ausgelegt sind, daß sie ein Übersetzungsverhältnis von 1,35:1 erbringen, wobei das Winkelgetriebe 164 umgedreht werden kann, um jeweils eine Ausgangsdrehzahl von 735 Upm zu haben, ungeachtet dessen, ob der Ackerschlepper eine Zapfwelle mit 540 Upm oder 1000 Upm aufweist.

Es ist somit zu ersehen, daß die Hauptantriebskupplung 80 so funktioniert, daß sie den Kraftfluß zu dem Taumelscheibengetriebe 52 des Mähwerks 46 und den Quetschwalzen 58 und 60 zusammen mit der Haspel 44 aufteilt. Außerdem ergibt sich mit dem erfindungsgemäßen Antriebssystem 64 eine in der seitlichen Ausdehnung kompakte Bauweise, die zu einer geringeren Gesamtbreite der Erntemaschine 10 führt, im Gegensatz zu bekannten Erntemaschinen, bei denen ein Antriebsstrang innerhalb eines Getriebegehäuses vorgesehen ist, von dem Ausgangswellen ausgehen, die über Winkelgelenke mit den oberen und unteren Quetschwalzen verbunden sind. Diese kompakte Bauweise beruht darauf, daß das Hauptantriebszahnrad 128 und die Antriebsscheibe 158 für das Mähwerk 46 zur gemeinsamen Drehbewegung mit der ersten und zweiten Abtriebsscheibe 84 und 86 der Hauptantriebskupplung 80 entsprechend angeordnet bzw. ausgebildet sind, und auf der engen Verbindung der Zahnräder zum Antrieb der Quetschwalzen 58, 60.

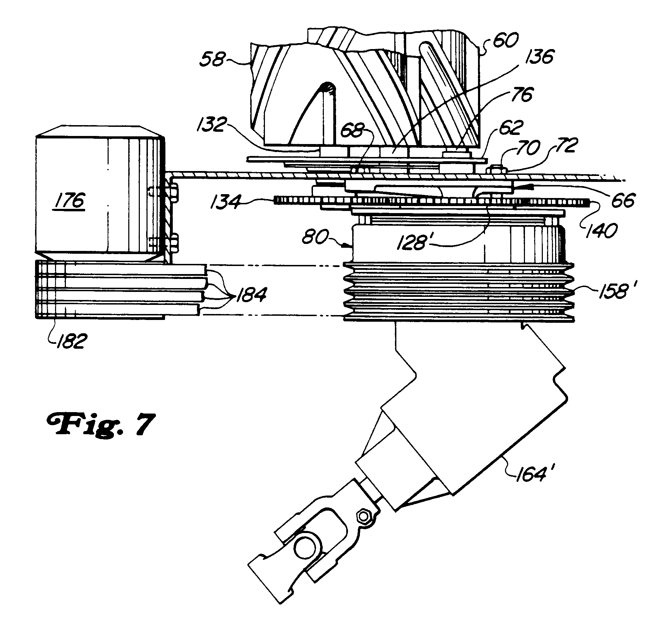

Die weitere Beschreibung nimmt Bezug auf die Darstellung in den Figuren 6 und 7. Dort ist eine Erntemaschine 10' zu sehen, die sich von der vorbeschriebenen Erntemaschine 10 dadurch unterscheidet, daß sie mit einem Scheibenmähwerk 170 als zweite anzutreibende Einheit ausgestattet ist, anstatt mit einem hin- und herbewegten Messer in einem Mähbalken und einer Haspel. Im einzelnen enthält das Scheibenmähwerk 170 eine Bergungsvorrichtung 30' mit einem sich quer erstreckenden Mähbalken 172, der sich zwischen den sich gegenüberliegenden Endelementen eines Rahmens 32' der Bergungsvorrichtung 30' erstreckt und an diesen befestigt ist. Mehrere drehende Schneideinheiten 174 sind mit Abstand zueinander auf dem Mähbalken 172 angebracht, von denen nur die am weitesten links gelegene Schneideinheit 174 gezeigt ist. Oberhalb der Schneideinheit 174 ist an dem Rahmen 32' ein Mähbalkengetriebegehäuse 176 angebracht, das eine sich nach unten erstreckende Ausgangswelle 178 besitzt, die dazu vorgesehen ist, eine Eingangswelle 180 des Mähbalkens 172 anzutreiben, wobei die Eingangswelle 180 gleichzeitig als Antriebswelle für die Schneideinheit 174 dient. Die Leistung wird entlang des Mähbalkens 172 mittels eines darin untergebrachten, aber nicht gezeigten Getriebezugs, z. B. mittels eines Stirnradgetriebes übertragen, der eine Vielzahl von Umkehrrädern und Antriebsrädern für die Schneideinheiten 174 enthält. Das Mähbalkengetriebegehäuse 176 hat auch eine sich nach außen erstreckende Eingangswelle mit einer getriebenen Scheibe 182 zum Antrieb des Mähbalkens 172. Diese getriebene Scheibe 182 ist auf die Eingangswelle 180 montiert und mit einer Antriebsscheibe 158' für den Mähbalken 172 verbunden, die zugleich einen Bestandteil der ersten Abtriebsscheibe 86 der Hauptantriebskupplung 80 bildet. Die Antriebsscheibe 158' unterscheidet sich von der Antriebsscheibe 158 dadurch, daß sie mehrere Keilriemennuten aufweist, so daß das für den Betrieb des Scheibenmähwerks 170 zusätzlich erforderliche Drehmoment übertragen werden kann. Es wird auch darauf hingewiesen, daß aufgrund des zusätzlich erforderlichen Drehmoments nunmehr alle acht der Anpreßmittel 92 an der Hautantriebskupplung 80 zur Drehmomentübertragung benutzt werden, um die Abtriebsscheiben 84 und 86 zu sich und an die Hauptantriebsscheibe 82 zu pressen. Mehrere Keilriemen 184 verbinden die Antriebsscheibe 158' und die getriebene Scheibe 182 miteinander und verlaufen hierzu über eine Umlenkrolle 186. Es ist ein Winkelgetriebe 164' vorgesehen, das dem zuvor beschriebenen Winkelgetriebe 164 im wesentlichen entspricht, aber einen größeren Kegelrädersatz aufweist, um das zusätzliche für den Betrieb des Scheibenmähwerks 170 erforderliche Drehmoment zu übertragen. Im übrigen, d. h. bezüglich des Stirnradgetriebes zum Antrieb der oberen und unteren Quetschwalze 58, 60, ist das Antriebssystem 64 wie zuvor beschrieben ausgebildet.

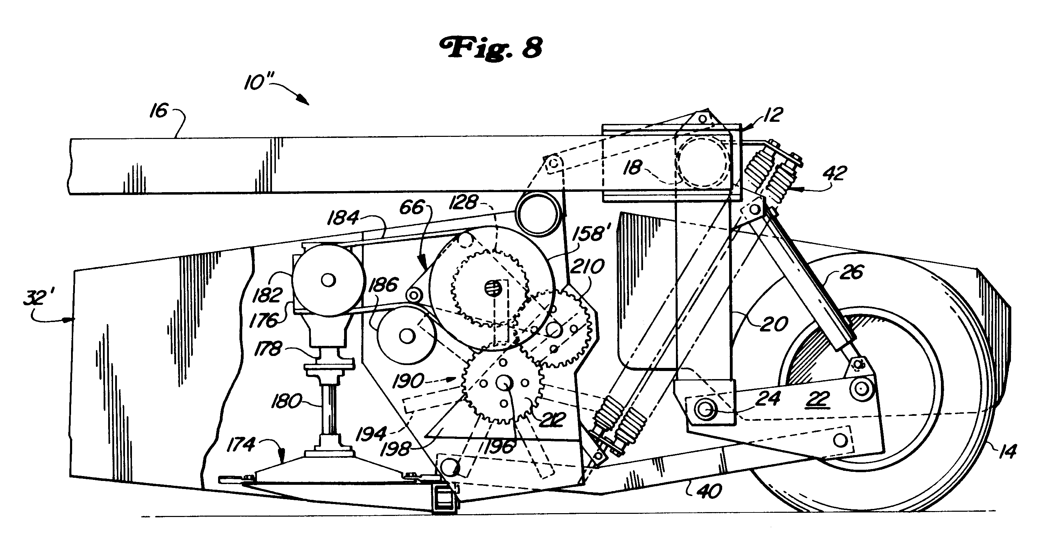

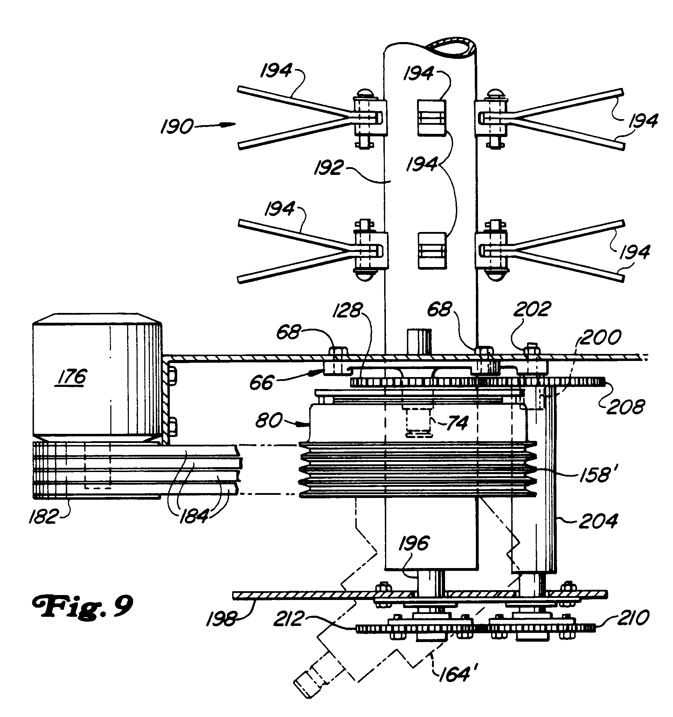

Des weiteren wird auf die Ausführung gemäß den Figuren 8 und 9 Bezug genommen. Die darin gezeigte Erntemaschine 10'' unterscheidet sich von der zuvor beschriebenen Erntemaschine 10' dadurch, daß sie anstatt einer als Quetschwalzen 58, 60 ausgebildeten Gutaufbereitungsvorrichtung bzw. ersten anzutreibenden Einheit eine als Rotor 190 ausgebildete aufweist. Der Rotor 190 enthält ein Zentralrohr 192 mit einer Vielzahl von Schlegeln 194, die an dem Zentralrohr 192 schwenkbar mit Abstand zueinander in bezug auf die Längsachse des Zentralrohrs 192 angebracht sind. Das linke Ende des Zentralrohrs 192 erstreckt sich durch eine Öffnung in der linken seitlichen Wand 34 und ist mit einer Endwelle 196 versehen, die sich durch einen außenliegenden dreiecksförmigen Wandteil 198 erstreckt und in diesem drehbar gelagert ist. Der Hauptträger 66 ist so an die seitliche Wand 34 angeschraubt, daß er sich oberhalb des in der Vorrichtung nach den Figuren 6 und 7 gezeigten Montagebereichs befindet, und zwar derart, daß sich der untere rückwärtige Eckbereich weiter rückwärtig befindet, als bei dem zuvor beschriebenen Ausführungsbeispiel. Eine Tragwelle 200 für eine Umlenkwelle 204 weist einen innenliegenden Endbereich auf, der in einer Bohrung in dem unteren rückwärtigen Eckbereich des Hauptträgers 66 aufgenommen ist, wobei die Tragwelle 200 ein innenliegendes Gewindeende mit einer darauf befindlichen Mutter 202 besitzt. Die Umlenkwelle 204 weist in ihrem innenliegenden Endbereich eine Axialbohrung und ein nicht gezeigtes Nadellager auf, mittels dessen sich der innenliegende Endbereich der Umlenkwelle 204 auf der Tragwelle 200 drehbar abstützt. Der außenliegende Endbereich der Umlenkwelle 204 ist drehbar in dem außenliegenden Wandteil 198 mittels eines Lagers 206 aufgenommen. Auf den innenliegenden Endbereich der Umlenkwelle 204 ist drehfest ein innenliegendes Umlenkrad 208 aufgesetzt, das mit dem Hauptantriebszahnrad 128 kämmt. Auf den außenliegenden Endbereich der Umlenkwelle 204 ist ein außenliegendes Umlenkrad 210 aufgesetzt, das mit einem Rotorantriebsrad 212 kämmt, das auf den außenliegenden Endbereich der Endwelle 196 montiert ist.

Nach alledem ist ersichtlich, daß der Hauptträger 66 mit der Hauptantriebskupplung 80 an mehreren unterschiedlich ausgebildeten Erntemaschinen 10, 10', 10'', insbesondere Halmgutaufbereitungsmaschinen, sogenannten Mower-Conditionern, verwendet werden kann. Diese können verschiedene anzutreibende erste und zweite Einheiten zum Trennen des Guts vom Boden und zum Bearbeiten, Aufbereiten des Guts aufweisen. Die einzige wesentliche Änderung, die vorgenommen werden muß, ist die, daß für Scheibenmähwerke 170, also solche mit drehenden Schneideinheiten 174, die erste Abtriebsscheibe 86 der Hauptantriebskupplung 80, gegen eine solche mit zusätzlichen integrierten Keilriemennuten ausgetauscht werden muß, und daß zusätzliche Anpreßmittel 92 zusammen mit den dazugehörigen Schrauben 94, Scheiben 96 und Muttern 98 eingebaut werden müssen, damit das zusätzlich erforderliche Drehmoment übertragen werden kann.

## Patentansprüche

1. Antriebssystem (64) für eine Erntemaschine (10, 10', 10''), insbesondere für eine Halmgutaufbereitungsmaschine, mit zwei anzutreibenden Einheiten (44, 46, 170 und 58, 60, 190) und mit einer Hauptantriebskupplung (80), die in koaxialer Anordnung eine Antriebsscheibe (82), eine zweite Abtriebsscheibe (84, 128), eine erste Abtriebsscheibe (86) und Anpreßmittel (92) enthält, die die Abtriebsscheiben (84, 86, 128) reibschlüssig an der Antriebsscheibe (82) mittelbar oder unmittelbar zur Anlage bringen, wobei die zweite anzutreibende Einheit (44, 46, 170) mit der zweiten Abtriebsscheibe (84, 128) und die erste anzutreibende Einheit (58, 60, 190) mit der ersten Abtriebsscheibe (86) in Antriebsverbindung steht.

2. Antriebssystem nach Anspruch 1, wobei die Hauptantriebskupplung (80) auf einer Welle (74) drehbar gelagert ist.

3. Antriebssystem nach einem oder mehreren der vorherigen Ansprüche, wobei die Antriebsverbindung der ersten anzutreibenden Einheit (58, 60, 190) als Stirnradgetriebe ausgebildet ist.

4. Antriebssystem nach einem oder mehreren der vorherigen Ansprüche, wobei die Antriebsverbindung der zweiten anzutreibenden Einheit (44, 46, 170) als Zugmittelgetriebe ausgebildet ist.

5. Antriebssystem nach einem oder mehreren der vorherigen Ansprüche, bei dem die erste anzutreibende Einheit (58, 60) wenigstens eine Quetschwalze (58) enthält, die an Walzentragarmen (62) vertikal schwenkbar gelagert ist, wobei die Schwenkachse zu der Mittenachse der Welle (74) koaxial verläuft.

6. Antriebssystem nach einem oder mehreren der vorherigen Ansprüche, bei dem die erste anzutreibende Einheit (58, 60) zwei Quetschwalzen (58, 60) enthält, wobei die erste Abtriebsscheibe (86) sowohl mit einem Antriebszahnrad (134) für eine Quetschwalze (58) als auch mit einem Umlenkrad (40) für den Antrieb der anderen Quetschwalze (60) in Eingriff steht.

7. Antriebssystem nach einem oder mehreren der Ansprüche 2 bis 6, bei dem die Welle (74) an einem Hauptträger (66) angebracht ist, der an einer die anzutreibenden Einheiten (58, 60, 190, 44, 46, 170) aufnehmenden Wand (34) festlegbar ist.

8. Antriebssystem nach Anspruch 7, bei dem die Befestigung des Hauptträgers (66) an der Wand (34) neben Schrauben (68) oder dergleichen über eine Welle (70) erfolgt, die das Umlenkrad (40) drehbar aufnimmt.

9. Antriebssystem nach einem oder mehreren der Ansprüche 5 bis 8, bei dem der Hauptträger (66) mit einem Schwenkzapfen (76) versehen ist, der einen Walzentragarm (62) schwenkbar aufnimmt und dessen Längsachse koaxial zu der der Welle (74) verläuft.

10. Antriebssystem nach einem oder mehreren der vorherigen Ansprüche, bei dem ein Zugmittelantrieb mit einer Übersetzungswelle (146) für eine Haspel (44) vorgesehen ist, wobei sich ein erster Antriebsstrang zwischen einer auf der Übersetzungswelle (146) drehfest aufgesetzten Scheibe (148) oder Zahnrad (152) und einer drehfest an der Haspel (44) angebrachten, getriebenen Scheibe (50) oder Zahnrad (154) erstreckt, während ein zweiter Antriebsstrang ein ebenfalls drehfest auf die Übersetzungswelle (146) aufgesetztes Zahnrad (144) mit einem Antriebsrad (142) für die andere Quetschwalze (60) verbindet.

11. Antriebssystem nach einem oder mehreren der vorherigen Ansprüche, bei dem die erste anzutreibende Einheit einen Rotor (190) enthält, der ein Rotorantriebsrad (212) aufweist, wobei eine Umlenkwelle (204) vorgesehen ist, die einerseits ein mit der zweiten Abtriebsscheibe (84, 128) kämmendes Umlenkrad (208) drehfest aufnimmt und andererseits ein mit dem Rotorantriebsrad (212) kämmendes Umlenkrad (210) drehfest trägt.

12. Antriebssystem nach einem oder mehreren der vorherigen Ansprüche, bei dem die Umlenkwelle (204) drehbar auf der Welle (70) gelagert ist.

13. Antriebssystem nach einem oder mehreren der vorherigen Ansprüche, bei dem ein Winkelgetriebe (164, 164') mit einer profilierten Ausgangswelle und einer zu dieser identisch profilierten Eingangswelle vorgesehen ist, wobei die Antriebsscheibe (82) eine Nabe (122) mit einem passenden Profil für eine entsprechende drehfeste Verbindung aufweist.

14. Antriebssystem nach Anspruch 13, bei dem auf der Eingangs- und Ausgangswelle unterschiedlich große, miteinander kämmende Zahnräder angeordnet sind, wobei deren Übersetzungsverhältnis so gewählt ist, daß bei einer Umkehrung des Winkelgetriebes (164, 164') die Eingangsdrehzahlen von 540 Upm und 1000 Upm zu derselben Ausgangsdrehzahl führen.

15. Antriebssystem nach einem oder mehreren der vorherigen Ansprüche, bei dem die Anpreßmittel (92) der Hauptantriebskupplung (80) zur Veränderung der Anpreßkraft veränderbar sind.

## Claims

1. A drive system (64) for a harvesting machine (10, 10', 10''), especially for a stalk crop processing machine, with two driven units, (44, 46, 170 and 58, 60, 190) and a main drive clutch (80), which includes in coaxial disposition a drive plate (82), a second driven plate (84, 128), a first driven plate (86) and pressure means (92), which bring the driven plates (84, 86, 128) directly or indirectly into frictional engagement with the drive plate (82), wherein the second driven unit (44, 46, 170) is drivably coupled to the second driven plate (84, 128) and the first driven unit (58. 60, 190) is drivably coupled to the first drive plate (86).

2. A drive system according to claim 1, wherein the main drive clutch (80) is mounted rotatably on a shaft (74).

3. A drive system according to one or more of the preceding claims, wherein the drive connection to the first driven unit (58, 60, 190) is formed as a spur gear transmission

4. A drive system according to one or more of the proceding claims, wherein the drive connection to the second driven unit (44, 46, 170) is formed as a belt/chain type transmission.

5. A drive system according to one or more of the preceding claims, in which the first driven unit (58, 60) has at least one crushing roller (58) which is mounted to pivot vertically on roller support arms (62), wherein the pivotal axis runs coaxially with the central axis of the shaft (74).

6. A drive system according to one or more of the preceding claims, in which the first driven unit (58, 60) has two crushing rollers (58, 60) and the first driven plate (86) is in engagement both with a drive gearwheel (134) for one crushing roller (58) and with a reversing wheel (40) for driving the other crushing roller (60).

7. A drive system according to one or more of claims 2 to 6, in which the shaft (74) is fitted on a main support (66) which can be fixed to a wall (34) receiving the driven units (58, 60, 190, 44, 46, 170).

8. A drive system according to claim 7, in which the attachment of the main support (66) to the wall (34) is effected by a shaft (70) which rotatably receives the reversing wheel (40), a, well as by screws (68) or the like.

9. A drive system according to one or more of claims 5 to 8, in which the main support (66) is provided with a pivot pin (76) which pivotally receives one roller support arm (62) and whose longitudinal axis runs coaxially with that of the shaft (74).

10. A drive system according to one or more of the preceding claims, in which a belt/chain type drive is provided with a transmission shaft (146) for a reel (44), wherein a first drive train extends between a pulley (148) or gearwheel (152) fitted rotationally fast on the transmission shaft (146) and a driven pulley (50) or gearwheel (154) fitted rotationally fast on the reel (44), while a second drive train connects a gearwheel (144) also fitted rotationally fast on the transmission shaft (146) to a drive wheel (142) for the other crushing roller (60).

11. A drive system according to one or more of the preceding claims, in which the first drive unit has a rotor (190) which comprises a rotor drive wheel (212), wherein a reversing shaft (204) is provided and receives on the one hand a rotationally fast reversing wheel (208) meshing with the second driven plate (84, 128) and on the other hand carries a rotationally fast reversing wheel (210) meshing with the rotor drive wheel (212).

12. A drive system according to one or more of the preceding claims, in which the reversing shaft (204) is mounted rotatably on the shaft (70).

13. A drive system according to one or more of the preceding claims, in which there is provided an angle drive (164, 164') with a profiled output shaft and an identically profiled input shaft, wherein the drive plate (82) has a hub (122) with a matching profile for a corresponding rotationally fast connection.

14. A drive system according to claim 13, in which gearwheels of different sizes and meshing with one another are provided on the input and output shafts, wherein their transmission ratio is so selected that on reversal of the angle drive (164, 164'), the input speeds of rotation of 540 rpm and 1000 rpm lead to the same output speed of rotation.

15. A drive system according to one or more of the preceding claims, in which the pressure means (92) of the main drive clutch (80) can be adjusted to alter the applied pressure.

## Revendications

1. Système d'entraînement (64) pour une moissonneuse (10, 10', 10''), en particulier pour une machine de conditionnement de la paille, avec deux unités à entraîner (44, 46, 170 et 58, 60, 190) et avec un embrayage d'entraînement principal (80) qui contient, suivant un agencement coaxial, une poulie d'entraînement (82), une deuxième poulie attaquée (84, 128), une première poulie attaquée (86) et des moyens de serrage (92) qui amènent directement ou indirectement les poulies attaquées (84, 86, 128) en position d'entraînement par friction par la poulie d'entraînement (82), selon lequel la deuxième unité à entraîner (44, 46, 170) est en liaison à entraînement avec la deuxième poulie attaquée (84, 128), et la première unité à entraîner (58, 60, 190) est en liaison à entraînement avec la première poulie attaquée (86).

2. Système d'entraînement selon la revendication 1, selon lequel l'embrayage d'entraînement principal (80) est monté rotatif sur un arbre (74).

3. Système d'entraînement selon une ou plusieurs des revendications précédentes, selon lequel la liaison d'entraînement de la première unité à entraîner (58, 60, 190) est conçue sous la forme d'une transmission à engrenage droit.

4. Système d'entraînement selon une ou plusieurs des revendications précédentes, selon lequel la liaison d'entraînement de la deuxième unité à entraîner (44, 46, 170) est conçue sous la forme d'une transmission par mécanisme d'entraînement.

5. Système d'entraînement selon une ou plusieurs des revendications précédentes, selon lequel la première unité à entraîner (58, 60) contient au moins un rouleau exprimeur (58) qui est monté pivotant verticalement sur des bras (62) de support de rouleau, l'axe de pivotement s'étendant de façon coaxiale par rapport à l'axe central de l'arbre (74).

6. Système d'entraînement selon une ou plusieurs des revendications précédentes, selon lequel la première unité à entraîner (58, 60) contient deux rouleaux exprimeurs (58, 60), la première poulie attaquée (86) étant en prise aussi bien avec une roue dentée d'entraînement (134) pour un rouleau exprimeur (58) qu'avec une roue de renvoi (40) pour l'entraînement de l'autre rouleau exprimeur (60).

7. Système d'entraînement selon une ou plusieurs des revendications 2 à 6, selon lequel l'arbre (74) est agencé sur un support principal (66) qui peut être fixé à un panneau (34) recevant les unités à entraîner (58, 60, 190, 44, 46, 170).

8. Système d'entraînement selon la revendication 7, selon lequel la fixation du support principal (66) au panneau (34) s'effectue, en plus de vis (68) et analogues, par l'intermédiaire d'un arbre (70) qui reçoit la roue de renvoi (40) qui peut tourner.

9. Système d'entraînement selon une ou plusieurs des revendications 5 à 8, selon lequel le support principal (66) est muni d'un pivot (76) qui reçoit un bras (62) de support de rouleaux qui peut pivoter, et l'axe longitudinal du pivot s'étendant de façon coaxiale par rapport à l'arbre (74).

10. Système d'entraînement selon une ou plusieurs des revendications précédentes, selon lequel on prévoit une transmission par mécanisme d'entraînement avec un arbre de transmission (146) pour un rabatteur (44), une première courroie d'entraînement s'étendant entre une poulie (148), ou roue dentée (152), montée sans pouvoir tourner sur l'arbre de transmission (146) et une poulie (50), ou roue dentée (154), entraînée et montée sans pouvoir tourner sur le rabatteur (44), pendant qu'une deuxième courroie d'entraînement relie une roue dentée (144), montée également sans pouvoir tourner sur l'arbre de transmission (146), avec une roue d'entraînement (142) pour l'autre rouleau exprimeur (60).

11. Système d'entraînement selon une ou plusieurs des revendications précédentes, selon lequel la première unité à entraîner contient un rotor (190) qui possède une roue d'entraînement de rotor (212), un arbre de renvoi (204) étant prévu qui, d'une part, reçoit une roue de renvoi (208) fixe en rotation sur cet arbre et s'engrenant avec la deuxième poulie attaquée (84, 128) et, d'autre part, supporte une roue de renvoi (210) fixe en rotation sur cet arbre et s'engrenant avec la roue d'entraînement de rotor (212).

12. Système d'entraînement selon une ou plusieurs des revendications précédentes, selon lequel l'arbre de renvoi (204) est monté rotatif sur l'arbre (70).

13. Système d'entraînement selon une ou plusieurs des revendications précédentes, selon lequel un engrenage angulaire (164, 164') est prévu avec un arbre profilé de sortie et un arbre d'entrée qui est profilé de manière identique au premier, la poulie d'entraînement (82) possédant un moyeu (122) avec un profil adapté pour une liaison correspondante fixe en rotation.

14. Système d'entraînement selon la revendication 13, selon lequel on agence, sur les arbres d'entrée et de sortie, des roues dentées de différentes grandeurs et s'engrenant entre elles, leur rapport de transmission étant choisi de telle sorte que, lors d'une inversion de l'engrenage angulaire (164, 164'), les vitesses de rotation d'entrée de 540 t/min et 1.000 t/min conduisent à la même vitesse de rotation de sortie.

15. Système d'entraînement selon une ou plusieurs des revendications précédentes, selon lequel les moyens de serrage (92) de l'embrayage d'entraînement principal (80) peuvent être modifiés pour obtenir une modification de la force de serrage.
